(19) **Europäisches Patentamt**
**European Patent Office**
**Office européen des brevets**

(11) **EP 3 302 855 B1**

# (12) EUROPEAN PATENT SPECIFICATION

(45) Date of publication and mention
of the grant of the patent:
**22.09.2021 Bulletin 2021/38**

(21) Application number: **16802274.7**

(22) Date of filing: **06.06.2016**

(51) Int Cl.:
**B22F 9/14** *(2006.01)*        **B01J 2/04** *(2006.01)*

(86) International application number:
**PCT/CA2016/000165**

(87) International publication number:
**WO 2016/191854 (08.12.2016 Gazette 2016/49)**

(54) **PLASMA APPARATUS FOR THE PRODUCTION OF HIGH QUALITY SPHERICAL POWDERS AT HIGH CAPACITY**

PLASMAVORRICHTUNG ZUR HERSTELLUNG VON HOCHWERTIGEN KUGELFÖRMIGEN PULVERN BEI HOHER KAPAZITÄT

APPAREIL À PLASMA POUR LA PRODUCTION DE POUDRES SPHÉRIQUES DE HAUTE QUALITÉ À HAUTE CAPACITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.06.2015 US 201562171618 P**

(43) Date of publication of application:
**11.04.2018 Bulletin 2018/15**

(73) Proprietor: **Pyrogenesis Canada Inc.**
**Montreal, QC H3J 1R4 (CA)**

(72) Inventors:
• **DORVAL DION, Christopher Alex**
**Montréal, Québec H4E 3E8 (CA)**

• **KREKLEWETZ, William**
**Pointe Claire, Québec H9R 3S6 (CA)**
• **CARABIN, Pierre**
**Montreal, Québec H4A 3E5 (CA)**

(74) Representative: **KIPA AB**
**P O Box 1065**
**251 10 Helsingborg (SE)**

(56) References cited:
**WO-A1-2011/054113**    **CA-A1- 2 538 239**
**CA-A1- 2 912 282**    **CN-A- 104 475 744**
**US-A- 5 294 242**    **US-A- 5 707 419**
**US-A- 5 808 270**    **US-A- 5 935 461**

**Description**

FIELD

The subject matter of the present disclosure relates to the production of high purity spheroidal powders for use mainly in additive manufacturing (3D printing) and Hot Isostatic Pressing (HIP).

BACKGROUND

There is a growing demand for fine high quality spherical metallic powders. For example, one major application for such powders is the 3D printing industry, which has been demanding for narrow size cuts of high quality spherical satellite-free Ti-6AI-4V (titanium alloy), of generally between 45 and 45 microns. or 45-106 um. The 106-250 um cut size cut is used for Hot Isostatic Pressing (HIP).

This application has raised the bar in terms of quality, as it consumes the highest quality of powders currently available on the market. Many criteria are used to rate the quality of a powder: its spheroidicity, its particle size distribution, the absence of satellites (significantly small particles that are attached to the main particles). One current problem is that the production capacity of such quality powder is very limited. Another one is that a typical atomization system produces a wide range of particle size, while the industry asks for very narrow and specific cuts.

Numerous methods have been developed over the last years to produce powders by atomization.

For example in US Patent No. 5,707,419, a method is disclosed whereby plasma torches are used to melt and atomize a titanium wire. In this disclosure, the feed rate for example for titanium is limited to 0.75 kg/h using a wire diameter limited to 3.2 mm (1/8"), and the plasma torches are fixed in position at a 30° angle with respect to the axis of the feed. This 30° angle had been determined as being the optimal angle under certain circumstances. Here, the torches are locked at this specific angle to insure the alignment with the wire. While this method has the advantage of repeatability between runs, as well as minimizing the chances of aiming beside the wire, applicant's experience demonstrates that this configuration is not optimal.

In PCT Patent Publication No. WO 2011/054113, a method is proposed to improve productivity of the plasma atomization using electrodes for preheating. Using electrodes for preheating is a very complicated process. In this arrangement, there are typically (3) electrodes as well as three (3) plasma torches to ensure a uniform heating. The wire is heated by arcing each electrode to the wire. Therefore, 3 currents are passing through the wire and heat it by resistive heating. This means that 6 power supplies are required to operate, noting that the more power sources there are, the more difficult it is to manage the heat going to the wire, in addition to this also increasing the capital and operating cost significantly.

There are also a number of mechanical inconvenients to this arrangement. For example, for plasma atomization to take place, the torch alignment according to the wire is very critical. All the electrodes and the torches, as well as the wire, must converge at the same exact point. The space around the apex convergence point being very limited, the design of the assembly is therefore dictated by mechanical constraints rather than by the process itself.

Therefore, it would be desirable to have a simplified device to allow for increasing the productivity of plasma atomization. There would also thus be a gain in having a system that allows controlling the particle size distribution.

SUMMARY

It would thus be highly desirable to provide a novel apparatus for producing quality powders.

It would also be highly desirable to provide a novel method for producing quality powders.

The invention is set out in the appended claims.

The embodiments described herein provide in one aspect an apparatus to produce powder from a wire by plasma atomization as defined in claim 1.

Furthermore, the embodiments described herein provide in another aspect a method to produce powder from a wire by plasma atomization as defined in claim 7.

BRIEF DESCRIPTION OF THE DRAWINGS

For a better understanding of the embodiments described herein and to show more clearly how they may be carried into effect, reference will now be made, by way of example only, to the accompanying drawings, which show at least one exemplary embodiment, and in which:

Figure 1 is a general schematic representation of a plasma apparatus in accordance with an exemplary embodiment;

Figure 2 is an enlarged detailed cross-sectional view of an induction coil and wire guide in accordance with an exemplary embodiment;

Figure 3 is an enlarged detailed cross-sectional view of a torch angle adjustment mechanism using ball flanges in accordance with an exemplary embodiment;

Figure 4 is schematic representation of the effect of the induction frequency onto the temperature profile in the wire; and

Figures 5a and 5b show a comparison of the torch angles and closeness of the tip to the wire between a conventional torch and a torch in accordance with an exemplary embodiment, wherein in Figure 5a, the conventional torch provides a fixed angle of 30° which results in longer distance; whereas in Figure 5b, the present torch shows a more aggressive angle, which translates into a much closer nozzle, thereby maximizing the heat and momentum transfer between the plasma and the wire.

## DESCRIPTIVE OF VARIOUS EMBODIMENTS

In order to produce high quality powders, controlling particle size and maximizing production rate in a plasma atomization reactor, an apparatus P and a method by which torch angle can be adjusted and wire preheated are hereby presented. It has now been demonstrated that varying the angle and the proximity of the tip of the nozzle to the wire can have a significant effect on the capacity as well as the particle size distribution.

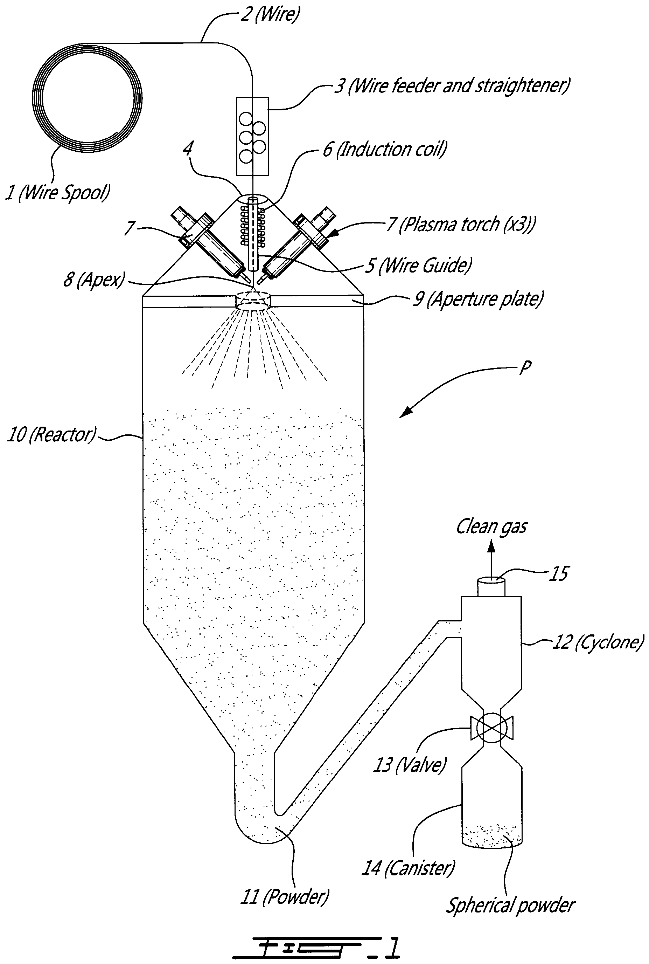

As illustrated in FIG. 1, a wire 2 provided on a metallic wire spool 1 is uncoiled therefrom and is then fed through a wire feeder and straightener 3. The straight wire 2 is fed through a pass-through flange 4. Then, the wire 2 enters into a wire guide 5 that is surrounded by an induction coil 6, prior to being atomized by three plasma torches 7 at the apex 8 thereof (the apex being the meeting point of the wire 2 and the three torches 7). The powder so produced passes through an aperture plate 9 and cools down as it falls down a reactor 10.

Once preheated, the wire 2 then reaches the apex 8, which is the zone where the wire 2 and the three plasma torches 7 meet for the atomization. The melting atomized particles freeze back to solid state as they fall down into a chamber of the reactor 10. The powder 11 is then pneumatically conveyed to a cyclone 12. The cyclone 12 separates the powder from its gas phase. The powder is collected at the bottom of a canister 14 while clean gas is then sent, via outlet 15, to a finer filtering system (not shown). The canister 14 can be isolated from the cyclone 12 by a gas-tight isolation valve 13.

Now turning our attention to the induction coil 6, the current apparatus P uses an induction coil to preheat the wire 2, which uses a single power supply and as the heat source does not encumber the apex zone. In this configuration, the wire preheating comes from a single uniform and compact source. Wire temperature can be controlled by adjusting induction power, which is a function of the current in the induction coil 6.

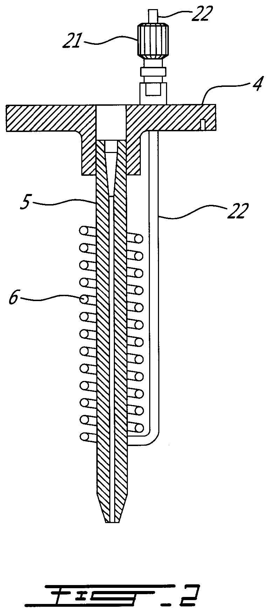

The induction preheating device is illustrated in FIG. 2. The pass-through flange 4 is made of a non electrically conductive material to ensure that the whole reactor is insulated from the coil. The pass-through flange 4 has two gas-tight holes equipped with compression fittings 21 used for passing the leads 22 of the induction coil 6 into the reactor 10.

The wire guide 5 can be designed to either react with or to be transparent to induction. For example, the wire guide 5 could be made of alumina, or silicon nitride, which are transparent to induction. It could also be made of silicon carbide or graphite, which reacts with induction. In the latter case, the hot wire guide, heated by induction, will radiate heat back into the wire 2.

For example, when the wire used was a 6.35mm (1/4") diameter Ti-6AI-4V Grade 23 ELI, the optimal induction frequency for this wire has been found to be between 170 and 290 kHz. The optimum frequency varies with the materials as well as the shape and dimension and the nature of the material used for the wire guide.

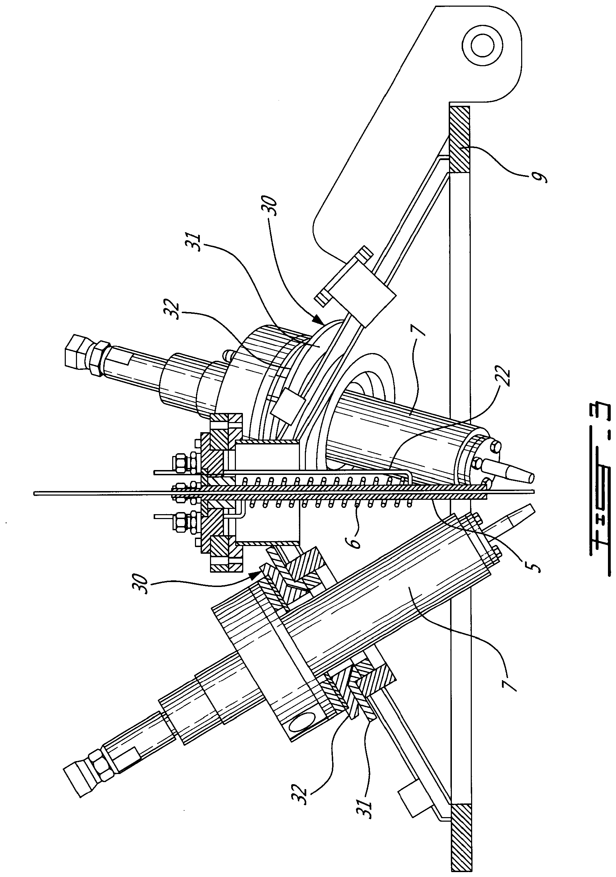

FIG. 3 illustrates an adjustable torch angle mechanism, which includes swivelling ball flanges 30. The three plasma torches 7 are used to atomize the wire 2. These three torches 7 are herein attached to the body of the reactor head using swivelling ball flanges.

The ball flanges 30 each include 2 flanges that fit into each other, namely a bottom flange 31 and an upper flange 32, which can swivel in accordance to each other. The bottom flange 31 that is connected to the reactor head is fixed, while the upper flange 32 can rotate up to an angle of 4° in every axis. Assuming the reactor head has been designed to have a nominal angle of 30°, this means that the torches 7 could cover any angle between 26° and 34°.

As varying the torch angle in relation to the wire 2 will also move the location of the apex 8 (the meeting point of the wire 2 and the three torches 7), this will have an effect on efficiency since the torches 7 have a constant length. In order to avoid such a problem, longer torches coupled with spacers can be used. The applicant has discovered that the closer the tip of the nozzles are to the wire, the higher is the capacity is and smaller is the mean particle size. By having longer torches and multiple sizes of spacers, it is possible to attain any angle while keeping the location of the apex 8 at the same place.

Pivoting the torches 7 seems to have an important effect on the plasma atomization process. Conventional systems stated that the optimal angle was to be fixed at 30°. Although one could have been tempted to doubt this statement, being able to swivel the torches was not an obvious alternative. Therefore, going with a fixed angle was justified in the case of the previous systems. The present arrangement suggests giving flexibility to the system by adding the swiveling ball flanges 30 to the design.

Varying the angle of attack between the wire 2 and the plasma jets can affect the atomization in several ways. The major difference between plasma atomization in regards to traditional gas atomization is that heat is supplied by the jet. Therefore, there are two major considerations to take into account; namely heat transfer from the torch 7 to the wire 2, and the atomization by itself.

An important aspect for plasma atomization is the quality of heat transfer between the torches 7 and the wire 2. Indeed, a proper alignment is required. The angle of attack also has an effect on the heat transfer, in two different ways; steeper (or smaller) the angle is, the surface area (A) that will exchange heat will increase. On the other hand, a shallower (higher) angle will promote a higher exchange coefficient (h). Also, bringing the nozzle closer will increase the temperature of the plasma plume as seen as the wire as well as its velocity, which will result in a higher temperature difference ($\Delta T$) and a higher exchange coefficient (h), respectively.

$$Q = hA\Delta T$$

where: Q is the heat transferred;

h is the heat transfer coefficient;

A is the surface area used for exchange; and

$\Delta T$ is the temperature difference between the wire and the torch.

The above equation is a classic heat transfer formula. The objective is to maximize the value of Q. The angle will have an effect on both the h and the A. From a heat transfer point of view, the optimal angle is the one that maximizes Q for a specific wire feed rate, size and material.

For atomization to occur, some micro droplets must form at the surface of the wire 2 (heating phase). Then a gas flow is used to detach that droplet from the wire 2 and carry it in suspension into the gas phase (atomization phase). It is known that high velocities are required to break the bond between the wire and the droplet. The following equation, taken from water atomization of aluminum literature [5], relates the mean particle size to angle between the melt stream and the argon jet:

$$D = C/V \sin\alpha$$

where: V is the plasma jet velocity;

C is a global constant regrouping the different parameters and conditions; and

$\alpha$ is the angle between the melt stream and the plasma jet.

Although the application is slightly different, the concept is similar; the plasma jets herein replace the water jets and the jets are herein used for heating instead of cooling. Indeed, the formula shows that higher gas velocities are able to detach finer particles, which makes sense as it requires more force to detach a finer droplet from a melting wire.

According to this equation, the angle have a similar effect according to this formula, which makes sense considering that the mechanical energy transfer is analogous to the heat transfer, and the angle would have as much a of an effect on the mechanical energy transfer coefficient that it has on the heat transfer coefficient (h) mentioned earlier.

It becomes clearer that in order to optimize the plasma atomization process, the angle has to be variable in order to adapt to different conditions. The two previous equations have shown how the parameters are intertwined, and that being able to vary the angles constitutes a significant feature of the present apparatus P.

The apparatus P thus includes *inter alia* (1) an inductive preheating of the wire to increase capacity; and (2) torches that are installed onto the reactor head, using swivelling ball flanges 30 which allow flexibility in regards to the angles that can be reached by the torch alignment, to allow for controlling particle size distribution (powder quality).

It is noted that conventional systems allowed for a production rate of approximately 0.75 kg/h with a mean particle size of around 80 um. Indeed, the optimal scenario would be to increase significantly the capacity while reducing the mean particle size distribution simultaneously. However, it was generally accepted that increasing the capacity would unfortunately also lead to a coarser particle size distribution using the known techniques. As opposed to the previous methods, the current method allows for the optimization of both parameters simultaneously by increasing the mechanical and thermal energy transferred of the process.

Plasma atomization uses supersonic plasma jets which have their core temperature at around 10 000 K, to melt and atomize metal coming from a wire source in a single step process. Although very powerful, the process is energetically inefficient; only a mere fraction of the heat from the plasma is transferred to the wire to heat and melt it (roughly 0.4 % for conventional systems), and only a negligible amount of kinetic energy coming from the nozzle is used to break up the droplets into finer ones (less than 0.001 % for conventional systems).

Generally speaking, increasing the heat transferred would result in a higher capacity, and increasing the mechanical energy that is transferred (from kinetic energy of the plume to bubble break up) results in finer particles. For example, shifting the mean particle size distribution from 80 um to 45 um would require an increase of about 78% in kinetic energy (momentum). These can be achieved by either increasing the raw energy put in, improving the quality of the transfer, or a combination of both. While, increasing the raw energy can increase the operation cost of the technology, it is often not the case of improving the energy transfer.

The following shows a comparison of the two arts.

Table 1 - Comparison of the conventional method versus the present method

| Method | Mean Particle Size ($D_{50}$) (um) | Capacity (kg/h) |
|---|---|---|
| Conventional method | 80 | 0.75 |
| New method | 45 | 5 |

It is important to note that the data in Table 1 are example of what can be achieved, but the actual improvements are not limited to these values. For example, with some adjustments, the capacity could increase to around 10 kg/h with an even smaller mean particle size.

All of the following suggested improvements are working in synergy to improve both the capacity and the particle size distribution simultaneously, but could be used independently:

Increase wire diameter size - In the previous methods, the wire size was limited to 3.2mm (1/8"). The current method suggests that the bigger the wire is, the higher can be the capacity, for two reasons: a) the residence time of the wire in the plasma is increased, and b) the surface area of the exchange is increased as well. Both results in an increased heat exchange between the plasma plumes and the wire.

Inductive Wire preheating - In the previous systems, the wire was not preheated prior to be fed to the plasma atomization zone, or was preheated using a complicated resistive heating apparatus. Wire preheating improves the overall heat balance of the system, as more efficient heating technologies can be used to do the heavy lifting. Inductive heating possesses numerous advantages over other heating technology, mainly because it can heat an object remotely with a good efficiency (-10-40%). The wire preheating can bring the wire up to melting temperature (or even above locally), up to operate using a liquid feed. Overheating the partially liquefied wire has a positive effect on the particle size distribution as it can reduce its viscosity and surface tension of the melted metal significantly. Therefore, the majority of the heat coming from the plasma can be used to melt and atomize or simply atomize, instead of being wasted mainly in latent heat. Wire preheating can have a considerable effect on the production capacity and the particle size distribution.

It is important to note that induction preheating can be used for both metallic and non-metallic materials, but using a different approach. Electrically conductive materials such as metals and alloys can be used with a wire guide made of a material that is either transparent to induction or not. On the other hand, wire feedstock made of non-conductive materials, such as ceramics, will not couple with induction, and therefore must be preheated using an insert that is conductive and sensitive to induction heating within the range of frequency used. In the latter case, the wire will be preheated indirectly from the wire insert only, via a combination of conduction, radiation and convection.

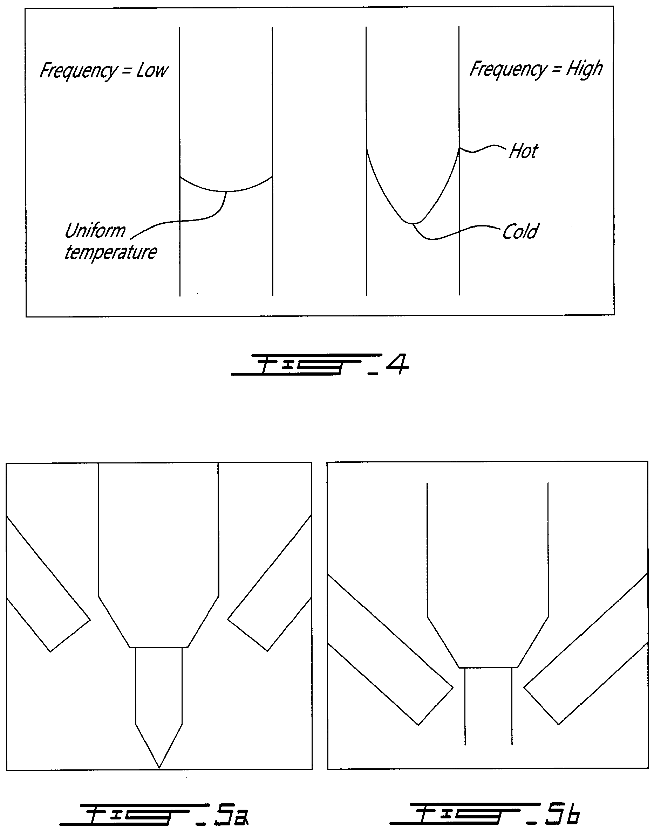

In the case where the feed material can couple with the wire, the induction frequency can be used to fine tune the temperature profile in the wire. Doing so will have a tremendous effect on the shape of the wire at the apex location, so indirectly to the particle size distribution (FIG. 5). A lower frequency leads to a more uniform temperature, while a high frequency will lead to temperature gradients in the wire. The induction frequency is varied easily by changing the coil length, where longer coils lead to lower frequencies.

Rotating ball flanges - In the previous systems, there was an inaccurate paradigm that the ideal angle was 30° and the flanges holding the torches were therefore fixed to that value. On the other hand, applicant has now herein determined otherwise. The concept of rotating ball flanges gives great flexibility regarding the quality of heat and momentum transfer. The distance also varies with the angle (FIG. 5a vs FIG. 5b). Indeed, the closer the tip is to the wire, the higher is the temperature of the plume and the faster is the velocity of the jet as seen by the wire. Also, the closer the tips of the nozzles are to the wire, and the closer to perpendicular they are with the latter, the higher will be the coefficients of heat and momentum exchange.

<u>Increasing the inlet argon pressure</u> - Increasing the argon inlet pressure translates into a higher gas velocity and mass flow. Increasing the pressure has a cubic relationship effect on the kinetic energy as the formula is :

$$E_k = \tfrac{1}{2}\, mv^2$$

Where m is the mass flow of the gas, v is the velocity of the gas and $E_k$ is the resulting kinetic energy.

**Technical Data:**

Table 2

| Mean Particle Size ($D_{50}$) (um) | Mechanical Power Required (J/s) | Improvement compared to conventional methods (%) | Kinetic Energy to Surface tension Mechanical Energy Transfer Efficiency (%) |
|---|---|---|---|
| 80 | 0.0336 | - | 0.00059 |
| 60 | 0.0448 | 33 | 0.00080 |
| 45 | 0.0597 | 78 | 0.00110 |

Table 3

| Method | Mean Particle Size ($D_{50}$) (um) | Capacity (kg/h) | Specific Thermal Energy Consumption (kWh/kg) | Heat Transfer Efficiency (%) |
|---|---|---|---|---|
| Conventional methods | 80 | 0.75 | 85 | 0.41 |
| Present method | 45 | 5 | 31.2 | 1.11 |

Table 4

| Wire Diameter | Capacities for Ti-6AI-4V ELI | | | |
|---|---|---|---|---|
| | With induction | | Without Induction | |
| (mm) | (kg/h) | (mm/s) | (kg/h) | (mm/s) |
| 6.35 (0.25") | 5 | 10 | 3 | 6 |
| 4.76 (0.1875") | 3 | 10 | 1.75 | 6 |
| 3.18 (0.125") | 1.25 | 10 | 0.75 | 6 |

Table 5

| Wire Diameter | Heat Tr. Eff. |
|---|---|
| (mm) | (%) |
| 3.18 (0.125") | 0.41% |
| 4.76 (0.1875") | 0.67% |

(continued)

| Wire Diameter | Heat Tr. Eff. |
|---|---|
| (mm) | (%) |
| 6.35 (0.25") | 0.81% |

### Frequency (kHz) versus Coil length (cm) used for a 6.35mm (1/4") wire

$y = 0,2076x^2 - 12,397x + 374,17$

It is noted that the feedstock could be made of a wide range of materials and is not limited only to metals. Examples of materials that could be herein atomized are, but not limited to, titanium (both commercially pure and titanium-based alloys), aluminum, stainless steels, Hastelloy™, Inconels, tungsten. Examples of non-metal materials could include ceramics, as long as they can be made under the form of wire or rod.

While the above description provides examples of the embodiments, it will be appreciated that some features and/or functions of the described embodiments are susceptible to modification.

## REFERENCES

[1] P. G. Tsantrizos, F. Allaire and M. Entezarian, "Method of production of metal and ceramic powders by plasma atomization". Patent US5707419 A, 13 January 1998.

[2] C. F. Yolton and J. H. Moll, "Method for Atomizing Titanium". Patent US4544404, 12 March 1985.

[3] M. Drouet, "Methods and Apparatuses for Preparing Spheroidal Powders". Patent application WO2011054113, 12 April 2011.

[4] C. F. Yolton, "Induction melting titanium in a vacuum or nonoxidzing atmosphere and treatment of an electric current". Patent US5084091A, 28 January 1992.

[5] B. Verlinden and L. Froyen, "Aluminium Powder Metallurgy," Training in Aluminium Application Technologies, vol. Advanced level 1, 1994.

## Claims

**1.** An apparatus to produce powder from a wire by plasma atomization, comprising:

- a device for preheating the wire;
- at least one plasma torch for heating the wire to atomization;
- a chamber for cooling atomized particles to solid state; and

wherein the device for preheating the wire includes an induction coil.

2. The apparatus of Claim 1, wherein there is provided a wire guide for coupling with the induction coil to transfer heat to the wire.

3. The apparatus of Claim 2, wherein the wire is electrically conductive, the wire is also heated by direct coupling at the same time as it is heated by the wire guide.

4. The apparatus of Claim 1, wherein there is provided a wire guide that is transparent to induction, whereby heat from the induction coil is transferred directly to the wire.

5. The apparatus of Claim 1, wherein the wire is made of a non-conductive material, and wherein there is provided for preheating the wire an insert that is conductive and sensitive to induction heating.

6. The apparatus of any one of Claims 1 to 5, wherein there is provided a feeding device adapted to accommodate wires of a diameter between 3.2mm (1/8") and 152mm (6") inclusively.

7. A method to produce metallic powder from a wire by plasma atomization, comprising:

- feeding the wire;
- preheating the wire with inductive heat either directly or indirectly, using an induction coil;
- heating the wire to atomization; and
- cooling atomized particles to solid state.

8. The method of Claim 7, wherein there is provided a wire guide for reacting with the inductive heat to transfer heat to the wire.

9. The method of Claim 8, wherein the wire is electrically conductive, the wire is also heated by direct coupling at the same time as it is heated by the wire guide.

10. The method of Claim 7, wherein there is provided a wire guide that is transparent to induction, whereby the inductive heat is transferred directly to the wire.

11. The method of Claim 7, wherein the wire is made of a non-conductive material, and wherein there is provided for preheating the wire an insert that is conductive and sensitive to induction heating.

12. The method of any one of Claims 7 to 11, wherein there is provided a feeding device adapted to accommodate wires of a diameter between 3.2mm (1/8") and 152mm (6") inclusively.


**Patentansprüche**

1. Eine Vorrichtung zur Produktion von Pulver ausgehend von einem Draht durch Plasmazerstäubung mit:

- einer Vorrichtung zum Vorwärmen des Drahts,
- mindestens einem Plasmabrenner zum Erwärmen des Drahts bis zur Zerstäubung,
- einer Kammer zum Abkühlen der zerstäubten Partikeln bis zum festen Aggregatzustand und

wobei die Vorrichtung zum Vorwärmen des Drahts eine Induktionsspule umfasst.

2. Die Vorrichtung gemäß Anspruch 1, wobei ein Führungsdraht zur Verbindung mit der Induktionsspule und zur Übertragung von Wärme an den Draht vorgesehen ist.

3. Die Vorrichtung gemäß Anspruch 2, wobei der Draht elektrisch leitfähig ist und durch direkte Verbindung gleichzeitig zum Führungsdraht erwärmt wird.

**4.** Die Vorrichtung gemäß Anspruch 1, wobei ein für Induktion durchlässiger Führungsdraht vorgesehen ist, über den Wärme von der Induktionsspule direkt auf den Draht übertragen wird.

**5.** Die Vorrichtung gemäß Anspruch 1, wobei der Draht aus einem nicht leitfähigen Material besteht und wobei zum Vorwärmen des Drahts eine leitfähige und für Induktionswärme empfindliche Einlage vorgesehen ist.

**6.** Die Vorrichtung gemäß einem der Ansprüche 1 bis 5, wobei eine Beschickungsvorrichtung für Drähte zwischen einschließlich 3,2 mm und 15,2 mm vorgesehen ist.

**7.** Ein Verfahren zur Produktion von Metallpulver ausgehend von einem Draht durch Plasmazerstäubung mit:

- einer Drahtbeschickung,
- dem direkten oder indirekten Vorwärmen des Drahts über Induktion mittels Induktionsspule,
- dem Wärmen des Drahts bis zur Zerstäubung und
- dem Kühlen der zerstäubten Partikel bis zum festen Aggregatzustand.

**8.** Das Verfahren gemäß Anspruch 7, wobei ein Führungsdraht zur Reaktion mit der Induktionswärme und zur Übertragung von Wärme an den Draht vorgesehen ist.

**9.** Das Verfahren gemäß Anspruch 8, wobei der Draht elektrisch leitfähig ist und durch direkte Verbindung gleichzeitig zum Führungsdraht erwärmt wird.

**10.** Das Verfahren gemäß Anspruch 7, wobei ein für Induktion durchlässiger Führungsdraht vorgesehen ist, über den Induktionswärme direkt auf den Draht übertragen wird.

**11.** Das Verfahren gemäß Anspruch 7, wobei der Draht aus einem nicht leitfähigen Material besteht und wobei zum Vorwärmen des Drahts eine leitfähige und für Induktionswärme empfindliche Einlage vorgesehen ist.

**12.** Das Verfahren gemäß einem der Ansprüche 7 bis 11, wobei eine Beschickungsvorrichtung für Drähte zwischen einschließlich 3,2 mm und 15,2 mm vorgesehen ist.

**Revendications**

**1.** Appareil permettant de produire une poudre à partir d'un fil par atomisation au plasma, comprenant :

- un dispositif destiné à préchauffer le fil ;
- au moins une torche à plasma destinée à chauffer le fil jusqu'à atomisation ;
- une enceinte destinée à refroidir les particules atomisées pour les faire passer à l'état solide ; et

où le dispositif destiné à préchauffer le fil inclut une bobine d'induction.

**2.** Appareil selon la revendication 1, dans lequel il est prévu un guide de fil destiné à être couplé à la bobine d'induction afin de transmettre de la chaleur au fil.

**3.** Appareil selon la revendication 2, dans lequel le fil est électroconducteur, le fil est également chauffé par couplage direct en même temps qu'il est chauffé par le guide de fil.

**4.** Appareil selon la revendication 1, dans lequel il est prévu un guide de fil qui est insensible à l'induction, grâce à quoi la chaleur de la bobine d'induction est directement transmise au fil.

**5.** Appareil selon la revendication 1, dans lequel le fil est constitué d'un matériau non conducteur, et où il est prévu afin de préchauffer le fil une pièce rapportée qui est conductrice et sensible au chauffage par induction.

**6.** Appareil selon l'une quelconque des revendications 1 à 5, dans lequel il est prévu un dispositif d'alimentation conçu pour recevoir des fils de diamètre compris entre 3,2 mm (1/8") et 152 mm (6") inclus.

**7.** Procédé permettant de produire une poudre métallique à partir d'un fil par atomisation au plasma, comprenant les étapes consistant à :

- fournir le fil ;
- préchauffer le fil par de la chaleur inductive soit directement, soit indirectement, en utilisant une bobine d'induction ;
- chauffer le fil jusqu'à atomisation ; et
- refroidir les particules atomisées pour les faire passer à l'état solide.

**8.** Procédé selon la revendication 7, dans lequel il est prévu un guide de fil destiné à réagir à la chaleur inductive afin de transmettre de la chaleur au fil.

**9.** Procédé selon la revendication 8, dans lequel le fil est électroconducteur, le fil est également chauffé par couplage direct en même temps qu'il est chauffé par le guide de fil.

**10.** Procédé selon la revendication 7, dans lequel il est prévu un guide de fil qui est insensible à l'induction, grâce à quoi la chaleur inductive est directement transmise au fil.

**11.** Procédé selon la revendication 7, dans lequel le fil est constitué d'un matériau non conducteur, et où il est prévu afin de préchauffer le fil une pièce rapportée qui est conductrice et sensible au chauffage par induction.

**12.** Procédé selon l'une quelconque des revendications 7 à 11, dans lequel il est prévu un dispositif d'alimentation conçu pour recevoir des fils de diamètre compris entre 3,2 mm (1/8") et 152 mm (6") inclus.

2 (Wire)

3 (Wire feeder and straightener)

4

6 (Induction coil)

1 (Wire Spool)

7

7 (Plasma torch (x3))

5 (Wire Guide)

8 (Apex)

9 (Aperture plate)

P

10 (Reactor)

Clean gas

15

12 (Cyclone)

13 (Valve)

14 (Canister)

11 (Powder)

Spherical powder

FIG. 1

FIG. 3

EP 3 302 855 B1

_Fig. 4_

_Fig. 5a_

_Fig. 5b_

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5707419 A
- WO 2011054113 A
- US 4544404 A
- US 5084091 A

**Non-patent literature cited in the description**

- **B. VERLINDEN ; L. FROYEN.** Aluminium Powder Metallurgy. *Training in Aluminium Application Technologies,* 1994, vol. 1